# EUROPEAN PATENT APPLICATION

(11) **EP 1 227 481 A1**
(43) Date of publication of application: **31.07.2002**
(21) Application number: 02075190.5
(22) Date of filing: 17.01.2002
(51) Int. Cl.: G11B 20/00, G06F 1/00, G11B 7/007

(54) **Copy protection using a preformed id and a unique id on a programmable cd-rom**

(30) Priority: 29.01.2001 US 772333
(71) Applicant: EASTMAN KODAK COMPANY, Rochester, New York 14650 (US)
(72) Inventor: Barnard, James A., Rochester, New York 14650-2201 (US); Inchalik, Michael A., Rochester, New York 14650-2201 (US); Ha, Bruce L., Rochester, New York 14650-2201 (US)
(74) Representative: Nunney, Ronald Frederick Adolphe

(57) **Abstract**

A copy-protected optical disc (10), including a preformed ID (22) which is impressed upon the optical disc during optical disc manufacture, a unique ID (24) which was written on the optical disc after it is manufactured; and an encrypted program written onto the optical disc wherein the encryption of such program is based upon the preformed ID and the unique ID.

## Description

The present invention relates to copy protection for information recorded on a compact disc or other optically recorded disc.

Consumer purchase of optical discs that contain audio, video, software, or data has generated a multi-billion-dollar industry. Recently, the advent of low-cost optical recording media and drives has enabled widespread unauthorized copy of this content. To defeat this, various copy protection schemes have been proposed. However, some of those schemes rely on characteristics of the digital data stream, which can be copied by sophisticated low-cost recorders using bit-for-bit copying. Other schemes rely on changing the characteristics of the optical disc in ways that make it difficult to both write and read. Still other schemes rely on network connections or secondary "key" disc schemes that do not allow stand-alone protection.

Horstmann (US-A-6,044,469) discloses a software protection mechanism with a protector module that reads a license file and executes code based upon the license that has been purchased. Thus, it protects software at the logical level, especially for parts of the software for which rights have not been granted. If this system were included on a compact disc (CD), a reproduction of this disc using a standard CD writer would make a copy with all the existing access in place.

Asai and others (US-A-Re. 35,839) describes a method of using an identifier region on a compact disc to store data that is compared with data stored elsewhere on the disc to verify authenticity. While this protects the data on a logical level, a simple bit-for-bit copy of the disc would subvert this protection scheme.

DeMont (US-A-5,982,889) teaches a method for verifying the authenticity of a user's access to information products. The disadvantage of this system is that authentication is done via a central site. The user who does not wish to (or cannot) connect to the network is excluded from using this product.

Hasebe, and others (US-A-5,555,304) describe a system, which is keyed to the individual user and to computer used. This limits an authorized user to the use of the program on a single computer, and severely restricts the users' mobility or ability to upgrade their equipment. Further, while this patent also claims the use of data stored in an un-rewritable area of a disc, the manner in which it is made un-rewritable leaves open the possibility of copying the data (including the "un-rewritable" portion) to a fresh disc.

A series of patents by Fite et al (US-A-5,400,319, US-A-5,513,169, US-A-5,541,904, US-A-5,805,549, and US-A-5,930,215) discloses a method of creating a machine-readable serial number code on optical discs by selectively removing the reflective layer from small areas of the disc in a way that creates a definable code. The disadvantage to such a system is that special equipment is required to write this special code.

Kanamaru (US-A-5,940,505) teaches how a CD-ROM may be copy-protected. However, all embodiments of Kanamaru's invention require auxiliary hardware, either in the form of an integrated circuit or an additional computer board, to decrypt the information on the disc.

O'Connor and others, US-A-5,745,568 discloses a method and system for securing CD-ROM (compact disc-read only memory) data for retrieval by a specified computer system. A region of an optical disc is encrypted with a hardware identifier as an encryption key. The hardware identifier is associated to the selected computer hardware. The software program files contained in the CD-ROM are encrypted therein using the hardware identifier as an encryption key. The selected software programs on the CD-ROM are installed on the selected computer by decrypting the software program files using the hardware identifier as an encryption key.

Akiyama and others, US-A-5,805,699, propose a software copying system which enables copyrighted software recorded in a master storage medium to be copied to a user's target storage medium in a legitimate manner. The master storage medium (that is, CD-ROM) has a software identifier, and the target storage medium has a storage medium identifier. The two identifiers are sent to a central site, which manages licensing for the rights to copy software products. At the central site, a first signature is generated from the two identifiers which is sent back to the computer user. In the computer of the user a second signature is generated from the same two identifiers. Only when the two signatures coincide with each other can the software programs be copied from the master storage medium to the target storage medium.

Chandra and others, US-A-4,644,493 discloses a method and apparatus which restricts software distribution used on magnetic media to use on a single computer. The original software contained on the magnetic medium is functionally uncopyable until it is modified by the execution of a program stored in a tamper-proof co-processor, which forms a part of the computer.

Indeck and others, US-A-5,740,244 discloses an implementation by which a software product on a magnetic medium may first instruct a computer in which it is inserted to read a fingerprint of a specified portion of the product and to compare this fingerprint with a pre-recorded version of the same fingerprint. If the fingerprints match, then the software product may permit the computer to further read and implement the application software stored thereon.

There are various problems associated with these methods. One is that many of them are open to what are known as "hacks," which means that if one user determines the method of decrypting or using the application, it is very easy for that person to disseminate the manner of gaining access to the application. Some methods prevent this problem by making the use of a particular application dependent upon a particular hardware combination. This approach creates a problem of portability. The legitimate user cannot use the application on a computer in a different location. The application may fail to start if users change their hardware configuration, such as by an upgrade.

It is therefore an object of the present invention to provide a way for providing copy protection (but which can be created on standard CD-mastering and writing equipment) cannot be subverted by a bit-for-bit copying scheme on standard CD-writers.

This object is achieved by a copy-protected optical disc, comprising:
a) a preformed identification number (ID) which is impressed upon the optical disc during optical disc manufacture;
b) a unique identification number for the optical disc which was written on the optical disc after it is manufactured; and
c) an encrypted program written onto the optical disc wherein the encryption of such program is based upon the preformed ID and the unique identification number.

This invention prevents the discovery of a generic hack while also providing portability, so that the authorized user is not restricted to using a single computer system. Also unlike much of the prior art it doesn't require a central rights granting facility to be contacted whenever the software is to be used or installed.

The use of both a physically-based key (a preformed ID) and a logically-based key (a unique ID) eliminates a number of methods of duplication. Simple bit-for-bit duplication is avoided because it will not copy the preformed ID, which is encoded in the physical structure of the disc tracks. "Sharing" of software between users or customers is avoided because such shared software will not run without the correct unique ID, even if (as might be the case) both users are using discs with the same preformed ID. This recording method creates an executable file, which is locked.
FIG. 1 is a plain view of a compact disc, which has copy protection in accordance with the present invention;
FIG. 2 is a schematic diagram of the software technique to encrypt the application in a non-copyable way;
FIG. 3 is a block diagram showing the steps for creating the encrypted software;
FIG. 4 is a block diagram, which shows one embodiment of how a CD is provided with copy protection;
FIG. 5 is a block diagram, which shows another embodiment of how a CD is provided with copy protection;
FIG. 6 is a block diagram which shows how the copy-protection scheme works when is CD is read;
FIG. 7 is a block diagram which shows how the copy protection herein described resists ways to circumvent it.

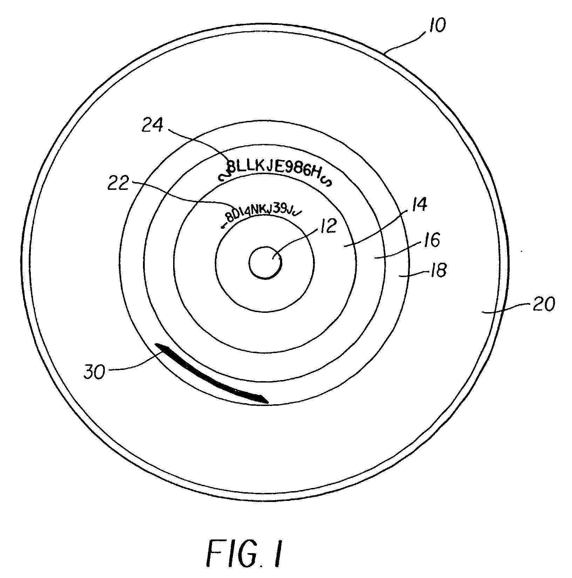

Turning now to FIG. 1, a copy-protected optical disc 10 is shown in accordance with the present invention. It is a Programmable CD-ROM disc, that is, it includes both a mastered pre-recorded area (a ROM area) and a recordable area (a RAM area). It has a hole 12 for a central spindle to spin the disc 10. This particular Programmable CD-ROM disc also includes a first session 14, which has been mastered; that is, a master disc was created including supplied software or data in the first session 14, and was subsequently used, either directly or through intermediate "Father" and "Mother" discs-to stamp multiple copies of the disc 10.

Writable compact optical discs, including Programmable CD-ROM, rely in part on groove modulation. The disc 10 has a continuous spiral track extending from an inner edge to an outer edge of the substrate. The spiral track is usually a groove which provides data channels on the disc 10 and also provides for tracking of the disc while reading or recording data. The groove is oscillated in a direction normal to the groove and is, therefore, referred to as a wobbled groove or a wobble groove. The tracks or grooves of a Programmable CD-ROM optical recording disc, the degree of modulation of the groove, as well as the arrangement of addressing and program data is usually provided in accordance with Orange Book Part II specifications. "Orange Book Part II" is a specification published by Philips International BV which defines key properties of recordable compact disc media and recording performance.

The groove oscillation frequency is modulated with a signal known as Absolute Time In Pre-groove, or ATIP. ATIP contains information about the location of the track relative to the entire recording surface of the optical disc 10. The Orange Book specification is that the ATIP signal is a 22.05 kHz FM signal which carries data at the rate of 3150 bits/second. This data is specified to be 75 42-bit frames per second. In the data area, each frame consists of 4 synchronization bits, 8 bits representing the minute count, 8 bits representing the second count, and 8 bits representing the frame count. The minute, second, and frame counts consist of two 4-bit binary-coded decimal (BCD) numbers. The maximum value for any of these values will be 75, so the most significant bits (MSBs) of each will always be zero in the data region of the disc 10. Thus, the three most significant bits of the minute count, second count, and frame count, concatenated together, will have the binary value of 000. The last 14 bits of each frame serve as CRC (cyclic redundancy check) error protection.

In the disc 10 lead-in area, which is defined as the area of the disc 10 between a diameter of 46 mm and 50 mm, the values of the MSBs will vary from 000. A value of 100 means that the frame contains timecode for the Power Calibration Area, the Program Memory area, or the Lead-In Area, all of which precede the program (recordable) area. Other MSB vales are used to define that the ATIP frame contains special control codes. These codes can be used for example to indicate the optimum writing power for the disc 10, the reference speed, the disc application code, the disc type and sub-type, the start position of the Lead-In Area, or the start position of the Lead Out Area for the disc 10.

In the ROM area of a Programmable CD-ROM optical disc the groove is further modulated in the form of depressions which correspond disc program data. The format in which non-audio information is stored on a CD is known as the "Yellow Book" standard.
The first session (ROM area) of the disc 10 includes a preformed identification number or ID 22, which is a digital signature recorded during the mastering process and subsequently pressed into each Programmable CD-ROM disc. The preformed ID 22 can be placed in the ATIP signal or in the disc program data signal. In the preferred embodiment it is placed in the ATIP signal in the Lead-In area using one or more of the special control codes. For example the disc application code, the disc type, the optimum writing power for the disc, the reference speed, the start position of the Lead-In Area, the start position of the Lead Out Area, or any other of the special or additional information designated by the Orange Book can be set to specific values known to the disc manufacturer. These values can be used separately or in combination to calculate a preformed ID code.

The disc 10 also includes a second session 16 that was written using recordable optical disc techniques, such as a CD-WO or CD-RW writer. The disc 10 can also include a third session 18, or even subsequent written sessions. The disc 10 can also include a user-recordable area 20. Included in the recorded sessions is a unique identification number or ID 24 that is written to the second session 16 in one or more known absolute sector addresses, and an encrypted executable package 30.

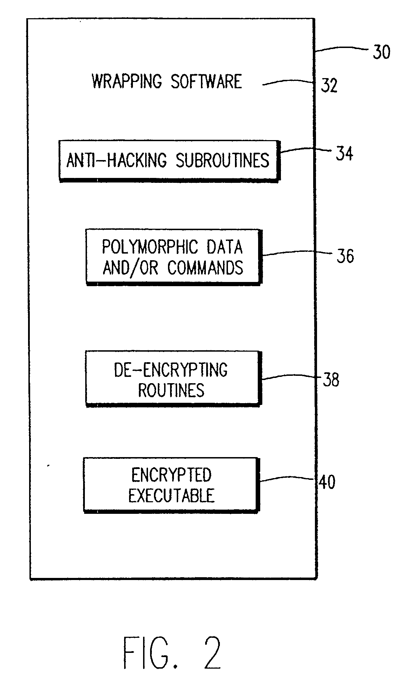

Turning next to FIG. 2, we see a diagram of one way of encrypting the executable program for use in this invention. An executable package is written to the disc10. It includes the original executable that has been encrypted. The encrypted package includes a single executable program 30, which has the same name on the disc 10 as the original executable program 40. The package 30 includes wrapping software 32 which runs first. The package also includes subroutines 34 to check for the presence of hacking software in memory when the program is run. There is also a polymorphic section 36 that includes data or commands or both. Polymorphic code generally provides multiple paths which achieve the same results, but are constructed in such a way that a program follows a different path each time it executes. Polymorphic code is used to make the program more difficult to reverse-engineer. De-encrypting routines 38 are designed to use the data stored on the Programmable CD-ROM (specifically the preformed ID 22 and the unique ID 24) to de-encrypt the executable 40.

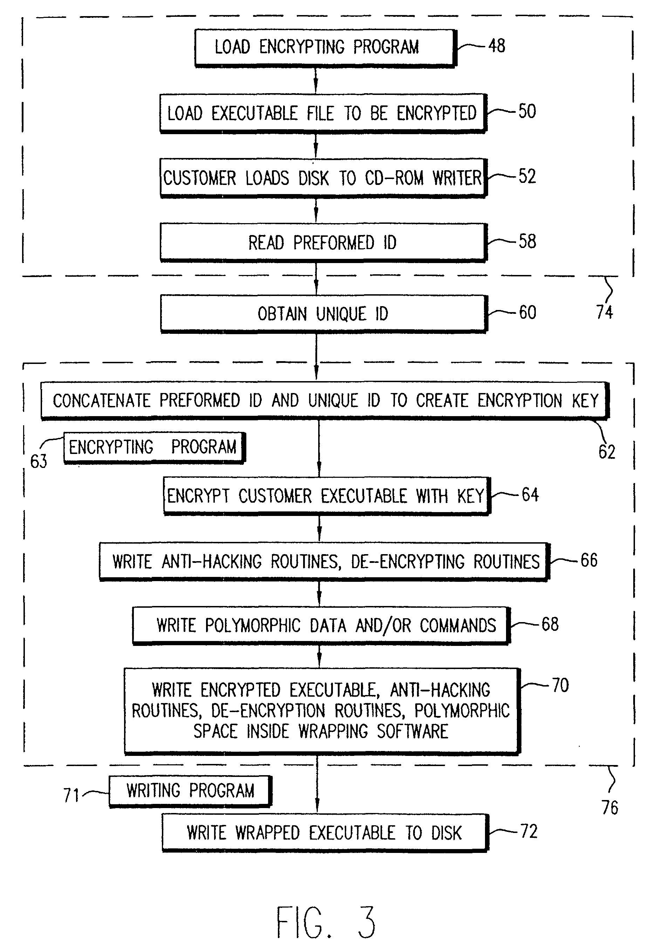

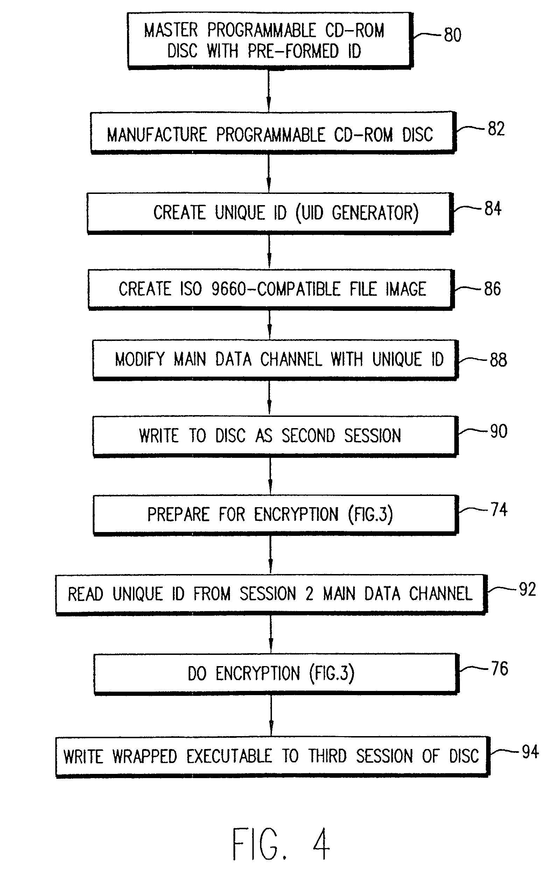

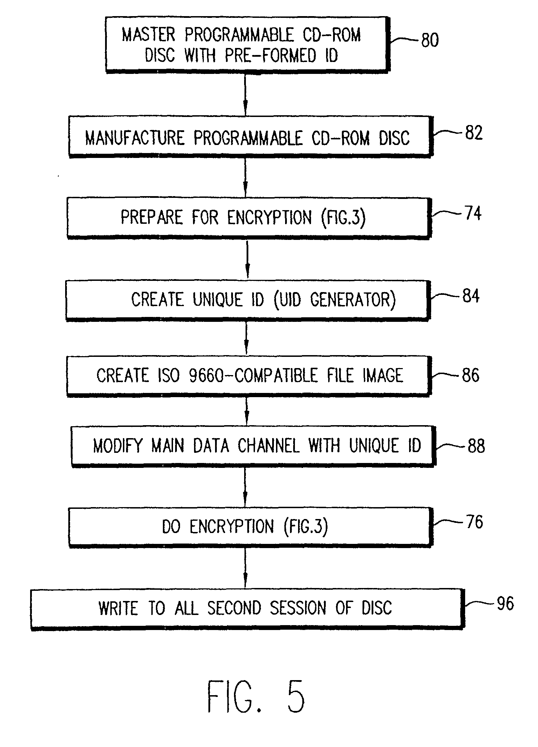

Turning next to FIG. 3, we see the steps necessary to encrypt the user executable program, using the special properties of the Programmable CD-ROM to encrypt it. This may be used in a number of different embodiments of this invention that will be detailed in this application. In step 48, the encrypting program, which may be mastered onto the Programmable CD-ROM or located on a local hard drive or on a distributed network, is read into the memory of a computer. In step 50, the executable file that requires encryption is read into memory. The customer, here defined as a person or entity using programmable CD-ROM to distribute a software application, puts the mastered Programmable CD-ROM disc into the CD-ROM writer in step 52.

The customer starts by designating the files to be encrypted. These files may include both data and executable programs or just executable programs. The customer then enters information corresponding to the preformed ID 22 and the unique ID 24 of the particular Programmable CD-ROM disc on which the encrypted software is to be written. In another preferred embodiment these values are read from the Programmable CD-ROM. When the security software has obtained the preformed ID 22 and the unique ID 24, it puts them together to create an encryption key in step 62. Encrypting program 63 uses this encryption key in step 64 to encrypt the executable file. The files that were encrypted in step 64 are then added as data files to a wrapper program in step 70. The wrapper program includes the subroutines required to read the preformed ID 22 and the unique ID 24 from the disc 10 as allowed by the designations in the security table, subroutines to detect the presence of reverse engineering tools in the memory of the computer where the program is running and to stop execution if they are detected, and the subroutines that decrypt and launch the execution of the software application. In step 72, the wrapped executable package is written to the Programmable CD-ROM disc in a writable session (16 or 18).

Cryptography and cryptographic functions are well known in the art. A good description can be found in Applied Cryptography, B. Schneier, John Wiley and Sons, Inc., New York, 1996, the contents of which is incorporated herein by reference. In our example, we will use the following notation:

**Table 1**

| Cryptographic notation | |
|---|---|
| Symbol | Meaning |
| P | Program to be encrypted |
| E | Encrypting function |
| B | Preformed ID |
| U | Unique ID |
| I | Concatenated ID = BU |
| X | Encrypted program = E(P,I) |

Any encryption function may be used for this invention which satisfies the following properties: the computation E(P,I) is feasible, that is E is computable in polynomial time; the polynomial time algorithm for calculation of E⁻¹(X,I) is known and is feasible; the encryption function E (and its decryption counterpart E⁻¹) uses a variable key I which is supplied at the time of computation; and the likelihood of producing a wrong program P' through the encryption/decryption process (i.e. P' = E⁻¹ {E(P,I),I}) is exceedingly small.

Encryption follows the steps:
1. The preformed ID B and the unique ID U are obtained;
2. The two ID's are concatenated I = BU to give the encryption/decryption key I;
3. The concatenated ID is used by the encryption algorithm E to calculate the encrypted program, X = E(P,I).

Decryption follows the steps:
1. The preformed ID B and the unique ID U are obtained;
2. The two ID's are concatenated I = BU to give the encryption/decryption key I;
3. The concatenated ID is used by the decryption algorithm E⁻¹ to calculate the original program, P = E⁻¹(X,I).

Turning next to FIG. 4, a block diagram for a first embodiment for practicing this invention is described. A Programmable CD-ROM disc is mastered (Step 80) using any of several well known mastering techniques for mastering compact discs. The Programmable CD-ROM includes a first session 14, although it can also include other mastered sessions as well. Included in the master disc is a preformed ID 22. The master disc is then used in step 82 for the manufacture of Programmable CD-ROM discs by standard stamping methods. At this point, a large number of identical Programmable CD-ROM discs exist.

The discs 10 are then written with individual identification. A unique ID 24 is created in step 84. The unique ID 24 can be a sequentially designated number that is determined by the order of manufacturing of the disc, or it can be a completely random number, or it can be chosen from a table of numbers that was created beforehand. In another preferred embodiment, the number is further processed by an algorithm that allows the generation of the actual number in such a way that valid numbers correspond to only a small part of the range of possible numbers. In this case, a valid number can only be generated by those knowing the generation algorithm. Also in this case it is possible to provide a checking algorithm to allow a number to be validated for example by use of well known public key, private key encryption and signing techniques. In another embodiment, the number is generated from a hardware identification and linked to a particular computer. (See, for example, O'Connor and others, US-A-5,745,568, the disclosure of which is incorporated herein.) In another embodiment, the unique ID 24 could be tied to a particular application, and therefore the same unique identification number could be used on multiple discs. The unique ID 24 is then used to create (step 86) an ISO 9660-compatible file image which will become a written session. The main-channel data for a known absolute sector address of this session is modified (step 88) with the unique ID 24, and in step 90 the session is written, not pressed, to the disc as a second session 16. If needed, this session could be written as a third or later session instead. At this point, each disc contains its own identification and is unique.

The customer then prepares the disc for encryption. This is shown schematically as step 74 and includes several steps, carried out by the security software, which were described in more detail in FIG. 3. The unique ID is read (Step 92) from a known absolute sector address in the second session. This is then used with the preformed ID 22 to do the encryption. The encryption is shown diagrammatically as step 76, and includes a number of steps which were described in more detail in FIG. 3. After the encryption is complete, the wrapped executable is written to a third session on the disc (Step 94).

Turning now to FIG. 5, we see a block diagram for a second embodiment of this invention in which the unique ID 22 and the encrypted executable are written to the same session. It includes many of the same steps as described in FIG. 4, but the order varies. A Programmable CD-ROM disc is mastered (Step 80) using any of several well known mastering techniques for mastering compact discs. The Programmable CD-ROM includes a first session 14, although it can also include other mastered sessions as well. Included in the master disc is a preformed ID 22. The master disc is then used in step 82 for the manufacture of Programmable CD-ROM discs by standard stamping methods. At this point, a large number of identical Programmable CD-ROM discs exist.

The customer then prepares the disc for encryption. This is shown schematically as step 74 and includes several steps, carried out by the security software, which were described in more detail in FIG. 3. A unique ID 24 is then created in step 84. The unique ID 24 can be a completely random number or it can be chosen from a table of numbers that was created beforehand. The unique ID 24 is then used to create (step 86) an ISO 9660-compatible file image which will become part of a written session. The main-channel data for a known absolute sector address of this session is modified (step 88) with the unique ID 24. The unique ID 24 is also used, along with the preformed ID 22 read in step 74, to do the encryption. The encryption is shown diagrammatically as step 76, and includes a number of steps which were described in more detail in FIG. 3. After the encryption is complete, the unique ID 24 and the wrapped executable are written to a second session on the disc.

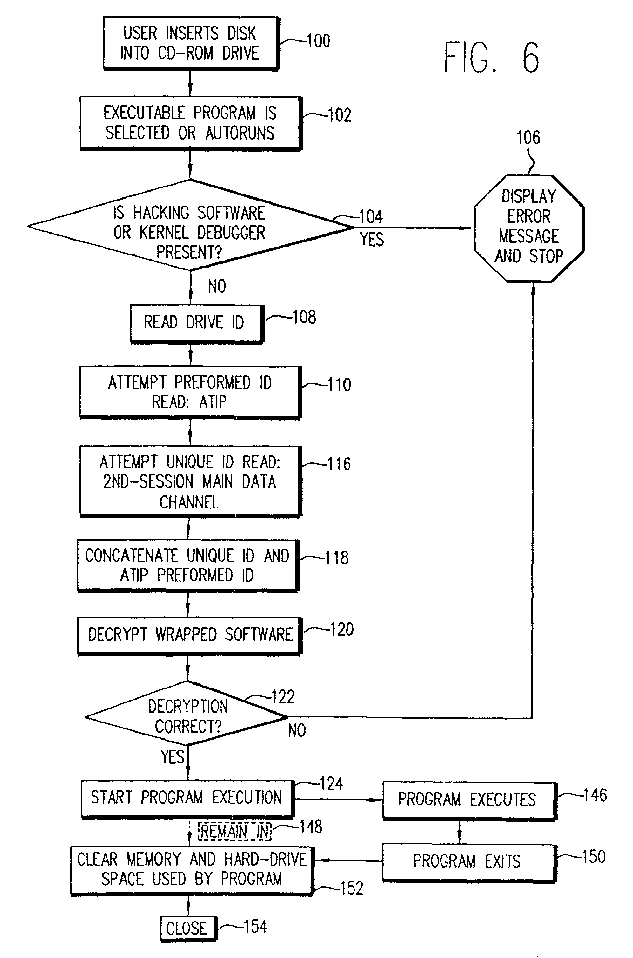

Turning now to FIG. 6, a method is shown by which this invention is designed to operate in the hands of the end-user. The end-user first inserts (step 100) the disc into a CD-ROM, CD-R, or CD-RW drive. An executable program on the disc runs automatically or is selected (step 102). The program first uses the anti-hacking subroutines 34 to check for hacking or kernel-debugging software that can be used to defeat copy-protection schemes (step 104). If such a program is present, the program displays an error message to the user and stops automatically (step 106).

If no such hacking software is present on the end-user's system, the decryption program reads the Drive ID in step 108. In step 110, the decryption program issues a command to the drive to read the preformed ID 22 from the ATIP signal. Finally, in step 116, the decryption program issues a command to the drive to read the unique ID 24 from the second (or later) session main data channel.

In step 118, the decryption program concatenates the unique ID 24 that was read in step 116 and the preformed ID 24 that was read from the ATIP in step 110. It then uses the concatenated result as a decryption key to decrypt the wrapped software in step 120. The program then determines (step 122) if the decryption was valid. There are several ways of doing this, for example looking for a flag in the decrypted program or checking if operating-system-specific code is present in the decrypted executable. If the decryption was unsuccessful, an error message is displayed and the program―and the entire process―stops (step 106). If the decryption was successful, the original executable is then started (step 124).

The decryption program remains in the background (step 148) while the program executes (step 146) and exits (step 150). Once the original program exits, the decryption program clears the memory and hard-drive space used by the original program (step 152) and then closes down (step 154).

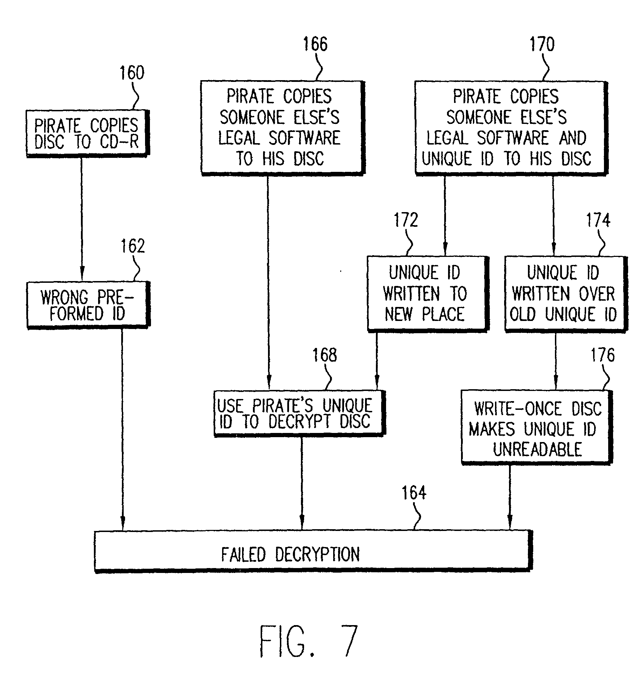

Turning now to FIG. 7, we see how this invention protects against various attempts at piracy. For example, a pirate may make a copy of a legal Programmable CD-ROM disc, which contains software that is licensed for use, but not for further distribution by individuals. A copy can be made (step 160) to a CD-R disc using any currently-available disc writer and authoring software. However, the preformed ID11 is contained in the ATIP of the disc 10, and cannot be copied. The CD-R disc the pirate uses will already have a preformed ID 22 encoded into the ATIP signal, or will have no preformed ID 22. In such a case, running the executable program 30 from the counterfeit disc will generate the wrong preformed ID (step 162), which will give a failed decryption (step 164).

The pirate may instead have a Programmable CD-ROM disc with one or more duly-registered programs, but may illicitly copy other programs from other users' Programmable CD-ROM discs (step 166). If the distribution is from the same distributor, the source and target discs could have the same preformed ID 22. However, the stolen program, if it has been duly registered by the originator, will be encrypted by a combination of the preformed ID 22 and the originator's unique ID. When the pirate attempts to run the stolen program, the program is decrypted using the preformed ID and the pirate's unique ID, which differs from the originator's unique ID (step 168). This produces the wrong key and decryption fails in step 164.

The pirate may be aware of the importance of the unique ID 24 and may even make a copy of it when he illicitly copies the above program from the originator (step 170). The unique ID 24 is written to a new part of the disc 10, which is in the user-writable area (step 172). However, decryption program 30 expects in step 116 that the unique ID 24 will be in a certain location. Therefore, the decryption program uses in step 168 the pirate's unique ID to decrypt the program that was encrypted using the originator's unique ID, and the decryption will fail (step 164).

The pirate may be aware not only of the unique ID 24, but its need to be located in a certain place. When he copies the software and unique ID 24 in step 170, he may exercise strict control so that the originator's unique ID overwrites any unique ID 24 that is already on the disc 10 (step 174). However, the write-once character of the disc 10 does not allow the older unique ID 24 to be erased, and writing a new unique ID makes it unreadable (step 176). Any further decryption of any program on the disc 10 will then fail (step 164)

Other features of the invention are included below.

The system in which the encrypting program is located on another computer system or on a network.

The method with the decrypting program reading the preformed ID from the ATIP signal.

The disc in which valid values of the unique ID correspond to only a small part of the range of possible numbers.

A uniquely identified optical disc, comprising:
a) a preformed ID which is formed in the ATIP signal; and
b) a unique ID which is written to the main channel data at a known absolute sector address on the optical disc.

## Claims

1. A copy-protected optical disc, comprising:
a) a preformed ID which is impressed upon the optical disc during optical disc manufacture
b) a unique ID which was written on the optical disc after it is manufactured; and
c) an encrypted program written onto the optical disc wherein the encryption of such program is based upon the preformed ID and the unique ID.

2. A method for copy-protecting information recorded on an optical disc, comprising the steps of:
a) forming a master disc that includes a preformed ID; and
b) forming a number of optical discs which have the preformed ID duplicated from the master disc; and
c) writing a unique identification number onto such optical disc; and
d) writing an encrypted program onto the optical disc wherein the encryption of such program is based upon the preformed ID and the unique ID.

3. The method of claim 2 further including the step of reading and decrypting the encrypted program using the preformed ID and the unique ID read from the disc.

4. The copy-protected optical disc in claim 1 in which the unique ID is recorded at one or more known absolute sector addresses on the disc.

5. The copy-protected optical disc in claim 1 in which the unique ID is recorded into the second session.

6. The copy-protected optical disc in claim 1 in which the disc further includes a recordable area.

7. The copy-protected optical disc in claim 1 in which in which supplied software and/or data is also pressed into the first session.

8. A copy-protection system including a computer, the copy-protected optical disc of claim 1, and an encrypting program capable of reading the preformed ID and the unique ID from the copy-protected optical disc of claim 1 and encrypting a customer program using them.

9. The copy-protected optical disc of claim 1 in which an encrypting program is pressed onto the optical disc.

10. A method of copy protection using a Programmable CD-ROM and a decrypting program, which includes the steps of:
a) reading the preformed ID and unique ID of the Programmable CD-ROM;
b) combining the preformed ID and the unique ID to form a decryption key;
c) using the decryption key to decrypt the original executable file;
d) placing the original executable into the computer's RAM memory and allowing it to execute; and
e) removing the original executable from the computer's memory and storage upon completion of the executable.
